# EUROPÄISCHE PATENTSCHRIFT

(11) **EP 1 073 514 B1**
(45) Veröffentlichungstag und Bekanntmachung des Hinweises auf die Patenterteilung: **17.10.2001**
(21) Anmeldenummer: 99913300.2
(22) Anmeldetag: 25.03.1999
(51) Int. Cl.: B01J 13/02

(54) **VERFAHREN ZUR HERSTELLUNG BESCHICHTETER PARTIKEL**
METHOD FOR THE PRODUCTION OF COATED PARTICLES
PROCEDE POUR LA PREPARATION DES PARTICULES ENROBEES

(30) Priorität: 08.04.1998 DE 19815698
(43) Veröffentlichungstag der Anmeldung: 07.02.2001
(73) Patentinhaber: Forschungszentrum Karlsruhe GmbH, 76133 Karlsruhe (DE)
(72) Erfinder: VOLLATH, Dieter, D-76297 Stutensee (DE); SZABO, Vinga, D-76646 Bruchsal (DE); SEITH, Bernd, D-76149 Karlsruhe (DE)
(86) Internationale Anmeldenummer: EP9902028
(87) Internationale Veröffentlichungsnummer: WO9952624

(56) Entgegenhaltungen:
- DE-C- 19 638 601
- FR-A- 2 336 456
- FR-A- 2 353 621
- FR-A- 2 353 622

## Beschreibung

Die Erfindung betrifft ein Verfahren zur Herstellung beschichteter Partikel gemäß Anspruch 1.

Beschichtete Partikel sind aus der DE-AS 2 011 306 bekannt. Diese Partikel bestehen aus einem Kern, der unter anderem aus einer anorganischen Verbindung eines Metalls oder Halbmetalls, beispielsweise Metall- oder Halbmetalloxiden wie Al₂O₃, Zr₂O₃ oder SiO₂ bestehen kann, und einer Hülle. Als Hülle wird eine polymerisierte organische Verbindung wie z. B. eine Polyvinyl oder Polystyrol vorgeschlagen.

Ähnliche Partikel sind aus der GB 1,006,753 bekannt. Diese Partikel bestehen ebenfalls aus einem Kern aus einer Metallverbindung und einer Hülle aus Poly(p-Xylol), die durch partielle Pyrolyse von cyclischem Di-p-Xylol hergestellt wurde.

Die DE 94 03 581 U beschreibt beschichtetes Nanopulver, das aus einem Kern mit einem Durchmesser von 3 bis 50 nm aus einer Verbindung eines Metalls mit einem Nichtmetall und einer Hülle aus einer Verbindung eines weiteren Metalls mit einem Nichtmetall. Eine Vorrichtung zur Herstellung des Nanopulvers, bei der ein Mikrowellenplasma eingesetzt wird, wird eingehend beschrieben.

Die FR-A-2 353 621 und FR-A-2 353 622 offenbaren Teilchen, die vorzugsweise aus siliziumoxidhaltigen Stoffen bestehen und mit einer kohlenstoffhaltigen Beschichtung überzogen sind. Die Beschichtung wird durch katalytische Crackung z. B. von Propylen bei Temperaturen zwischen 250 und 1000°C erzeugt. Die beschichteten Teilchen dienen als Füllstoffe für Kautschuke.

Die FR-A-2 336 456 offenbart beschichtete Pigmentpartikel. Als Substrat werden darin u. a. Glas, Talk, Silicagel oder Aluminiumoxid oder TiO₂-beschichtete Glimmerschuppen genannt. Die Hülle besteht aus Ruß, welcher gemeinsam mit Metallhydroxiden, Metalloxiden oder Wismutoxychlorid ausgefällt wird.

Aus der DE 196 38 601 C1 geht ein Verfahren zur Herstellung von Partikeln mit einem Kern aus einer Verbindung eines Metalls mit einem Nichtmetall und einer Hülle aus einer polymerisierbaren organischen Verbindung hervor, bei dem verdampfbare Metallverbindungen und ein Reaktionsgas in einem Mikrowellenplasma zur Reaktion gebracht werden, wobei der Kern entsteht. Die Hülle wird durch das UV-Licht des Mikrowellenplasmas auf dem Kern polymerisiert. Bei diesen Partikeln handelt es sich um Nanopartikel mit einem Kerndurchmesser von 3 bis 100 nm und einer Dicke der Hülle von 1 bis 20 nm.

In Römpp, Chemie-Lexikon werden unter dem Stichwort "Aerosil® " amorphe, kugelförmige Teilchen aus "pyrogener" Kieselsäure mit einem Durchmesser von 10 bis 20 nm beschrieben, die als Füllstoff für Kautschuke dienen.

In Römpp, Chemie-Lexikon ist unter dem Stichwort "Ruß" ferner angegeben, daß Ruß als Füllstoff für Elastomere, insbesondere in der Reifenindustrie, Verwendung findet. Die Herstellung von Ruß erfolgt durch unvollständige Verbrennung beispielsweise aromatischer Kohlenwasserstoffe mit einer rußenden, in sauerstoffarmer Atmosphäre brennenden Flamme.

Der Erfindung liegt die Aufgabe zugrunde, ein Verfahren zur Herstellung von Partikeln vorzuschlagen, die sich ebenso leicht wie Ruß in polymere Phasen, insbesondere in Kautschuk, chemisch einbinden lassen und die ein besseres Abriebverhalten zeigen. Die Partikel sollen sich homogen in der polymeren Phase verteilen lassen und sich infolge der chemischen Einbindung bei der Verformung des Kautschuks nicht mehr entmischen. Mit dem Verfahren soll insbesondere die Herstellung von Nanopartikeln möglich sein.

Die Aufgabe wird durch das in Anspruch 1 beschriebene Verfahren gelöst. In den weiteren Ansprüchen sind bevorzugte Ausgestaltungen des Verfahrens angegeben.

Durch die Einbindung harter Partikel in polymere Phasen, insbesondere Kautschuk, kann das Abriebverhalten deutlich verbessert werden. Das Abriebverhalten spielt insbesondere bei Fahrzeugreifen eine wesentliche Rolle.

Anorganische Partikel, insbesondere keramische Partikel, lassen sich nicht ohne Vorbehandlung homogen in polymeren Phasen verteilen, denn sie werden von der polymeren Phase chemisch nicht gebunden.

Erfindungsgemäß werden beschichtete Partikel hergestellt, die aus einem Kern aus einer Verbindung eines Metalls oder eines Halbmetalls mit einem Nichtmetall und einer Hülle aus Ruß bestehen und die sich wegen ihrer Rußhülle in gleicher Weise wie Ruß selbst in polymere Phasen, insbesondere in Kautschuk für Fahrzeugreifen einbinden lassen. Die Partikel haben gegenüber Ruß jedoch den Vorzug, daß sie die Abriebfestigkeit der polymeren Phase wegen ihres harten Kerns erhöhen.

Der Kern der beschichteten Partikel besteht vorzugsweise aus einer Keramik. Bevorzugt wird ein Kern aus Siliciumdioxid; der Kern kann jedoch auch aus anderen harten Stoffen wie z. B. Siliciumnitrid, Aluminiumoxid oder Zirkondioxid bestehen. Besonders bevorzugt werden beschichtete Nanopartikel, deren Kern eine Größe von weniger als 100 nm, insbesondere etwa 3 bis 50 nm aufweist. Beim Einsatz solcher Nanopartikel werden besonders günstige Eigenschaften erwartet. Die Dicke der Rußhülle kann praktisch frei gewählt werden; sie ergibt sich in der Praxis aus dem eingesetzten Herstellungsverfahren.

Als Herstellungsverfahren insbesondere von Nanopartikel eignet sich die Umsetzung in einem Mikrowellenplasma. Hierbei werden in einer ersten Verfahrensstufe Partikel aus einer Verbindung eines Metalls oder Halbmetalls mit einem Nichtmetall in eine Aerosol-form überführt. Vorzugsweise wird diese Verfahrensstufe mit der in der DE 196 38 601 Cl und der DE 94 03 581 U beschriebenen Weise durchgeführt. In diesen beiden Schriften werden eine geeignete Vorrichtung und ein geeignetes Verfahren zur Herstellung von Kernen beschichteter Nanopartikel eingehend beschrieben, wobei die hergestellten Kerne gleichzeitig in eine Aerosolform gebracht werden. Zur Herstellung größerer Kerne eignen sich jedoch auch die in den übrigen zitierten Druckschriften angegebenen Herstellungsverfahren.

Die Partikel werden anschließend mit einem Gas in Kontakt gebracht, das mindestens eine aromatische Verbindung enthält. Als aromatische Verbindungen eignen sich wegen ihres hohen Dampfdrucks insbesondere Benzol und Benzolderivate wie Toluol, Xylol oder Kresol; es können jedoch auch mehrkernige Aromaten wie Naphtalin und seine Derivate eingesetzt werden. Der Anteil der aromatischen Verbindung im Gas soll bei ca. 5 bis 10 Vol.-% liegen.

Die in Aerosol-Form vorliegenden Partikel werden anschließend zusammen mit dem Gas durch die Plasmazone eines Mikrowellenplasmas geleitet, wobei die Partikel mit einer Rußhülle versehen werden. Wie Untersuchungen ergeben haben, besitzt die auf diese Weise hergestellte Rußhülle noch restliche Bindungen zu Wasserstoffionen, die eine Einbindung insbesondere in Kautschuk besonders erleichtern.

Wird dem Gas außerdem ein Metallocen beigemischt, läßt sich die Ausbeute bezogen auf den Kohlenstoffanteil deutlich erhöhen. Als Metallocene eignen sich insbesondere Ferrocen [Fe(C₅H₅)₂] oder Magnesocen [Mg(C₅H₅)₂]. Der Anteil des Metallocens in der organischen Phase liegt vorzugsweise bei 10 bis 20 Gew.-%.

Die durch das beschriebene Herstellungsverfahren erhältlichen beschichteten Partikel eignen sich insbesondere als Zusatz zu polymeren Phasen, vor allem für Kautschuk und als Zusatz bei der Herstellung von Fahrzeugreifen. Sie lassen ein deutlich verbessertes Abriebverhalten erwarten.

Die Erfindung wird im folgenden anhand von Figuren und Ausführungsbeispielen näher erläutert.

Es zeigen
Fig. 1 eine schematische Darstellung der zur Durchführung der Ausführungsbeispiele eingesetzten Vorrichtung;
Fig. 2 das Reaktionsrohr der Vorrichtung.

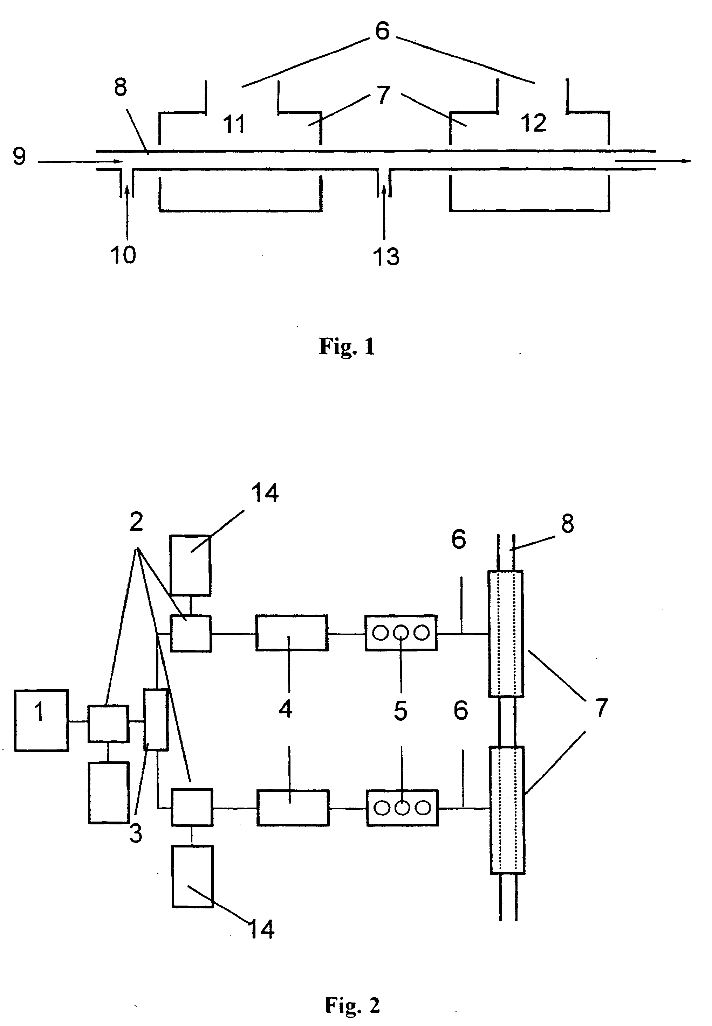

Fig. 1 zeigt eine schematische Darstellung der eingesetzten Vorrichtung mit einem Magnetron 1, drei Zirkulatoren 2, einer 3 dB-Verzweigung 3, zwei Richtkopplern 4 in jeder Verzweigung und jeweils einem Tri-Stub-Tuner 5. Die Wellenleiter 6 jeder Verzweigung münden in zwei TE₁₁-Hohlraumresonatoren, die ein Reaktionsrohr 8 umgeben.

Fig. 2 zeigt das Reaktionsrohr 8 mit den beiden TE₁₁-Hohlraumresonatoren 7. Das Reaktionsrohr besitzt einen Gaseinlaß 9 für das Reaktionsgas zur Herstellung der Kerne der beschichteten Partikel. Ein weiterer Gaseinlaß 10 dient zur Einleitung einer solchen chemischen Verbindung, die sich mit dem Reaktionsgas zum gewünschten Kern umsetzt. Das Reaktionsgas und die chemische Verbindung durchlaufen eine erste Plasmazone, in der sich der Kern bildet. Im Anschluß an die erste Plasmazone ist ein weiterer Gaseinlaß 13 vorgesehen, der zum Einleiten des aromatische Verbindungen enthaltenden Gases dient. Im Anschluß durchlaufen die Kerne und das Gas eine weitere Plasmazone 12, in der die Kerne mit der Rußhülle versehen werden. Das Produkt wird in einem (nicht dargestellten) Produktsammler aufgefangen.

### Beispiel 1

Als chemische Verbindung zur Herstellung des Kerns wurde Siliciumchlorid SiCl₄ in den Gaseinlaß 10 (Fig. 2) eingeleitet. Das Siliciumoxid wurde mit einem Reaktionsgas aus Argon und 20 % Sauerstoff, das durch den Gaseinlaß 9 eingeleitet wurde, in der Plasmazone 11 zu Siliciumdioxid-Partikeln umgesetzt. In der Plasmazone 12 wurden die Siliciumdioxid mit Hilfe von gasförmigem Naphtalin mit 10 Gew.-% Ferrocen, das durch den Gaseinlaß 13 eingeleitet wurde, mit Kohlenstoff beschichtet. Der Druck im Reaktionsrohr betrug ca. 15 mbar, der Gasdruchfluß 20 Nl/min, die Temperatur in den Plasmazonen 550°C und die Frequenz der Mikrowellen 915 MHz. Als Schwingungsmode im Mikrowellenresonator wurde der TE₀₁-Mode verwendet. Als Ergebnis des Versuchs wurden Nanopartikel aus glasartigem SiO₂ mit einer amorphen Kohlenstoffbeschichtung erhalten.

### Beispiel 2

Der Versuch nach Beispiel 2 wurde wiederholt, wobei jedoch als Gas zur Beschichtung Benzol mit ca. 10 Gew.-% Magnesocen eingesetzt wurde. Der Systemdruck betrug ca. 20 mbar, der Gasdurchfluß im Reaktionsrohr 50 Nl/min. Die Temperatur der beiden Plasmazonen wurde auf ca. 700°C erhöht. Als Ergebnis des Versuchs wurden glasartige Siliciumdioxid-Partikel mit einer Beschichtung von amorphem Kohlenstoff mit einem geringen Anteil von kristallisiertem Graphit erhalten.

## Patentansprüche

1. Verfahren zur Herstellung beschichteter Partikel, bei dem
a) Partikel aus einer Verbindung eines Metalls oder Halbmetalls mit einem Nichtmetall in eine Aerosol-Form überführt werden,
b) die Partikel in der Aerosol-Form mit einem Gas in Kontakt gebracht werden, das mindestens eine aromatische Verbindung enthält,
c) die Partikel in der Aerosol-Form zusammen mit dem Gas durch die Plasmazone eines Mikrowellenplasmas geleitet werden.

2. Verfahren nach Anspruch 1, bei dem als aromatische Verbindung Benzol oder Benzolderivate oder Naphtalin oder Naphtalinderivate eingesetzt werden.

3. Verfahren nach Anspruch 1 oder 2, bei dem ein Gas eingesetzt wird, das zusätzlich Metallocene enthält.

4. Verfahren nach Anspruch 3, bei dem Ferrocen oder Magnesocen als Metallocen eingesetzt wird.

## Claims

1. Method of producing coated particles, wherein
a) particles, formed from combining a metal or semimetal with a nonmetal, are converted into an aerosol form,
b) the particles in the aerosol form are brought into contact with a gas, which contains at least one aromatic compound, and
c) the particles in the aerosol form, together with the gas, are conducted through the plasma zone of a microwave plasma.

2. Method according to claim 1, wherein benzene or benzene derivatives or naphthalene or naphthalene derivatives are used as the aromatic compound.

3. Method according to claim 1 or 2, wherein a gas is used which additionally contains metallocenes.

4. Method according to claim 3, wherein ferrocene or magnesocene is used as the metallocene.

## Revendications

1. Procédé de préparation de particules enrobées, selon lequel
a) on met sous une forme d'aérosol des particules constituées d'un composé d'un métal ou d'un semi-métal avec un métalloïde,
b) on met en contact les particules sous forme d'aérosol avec un gaz qui contient au moins un composé aromatique,
c) on conduit les particules sous forme d'aérosol avec le gaz à travers la zone plasmatique d'un plasma à micro-ondes.

2. Procédé selon la revendication 1,
dans lequel
on utilise comme composé aromatique le benzène ou des dérivés de benzène, ou le naphtalène ou des dérivés de naphtalène.

3. Procédé selon la revendication 1 ou 2,
dans lequel
on utilise un gaz qui contient en outre un métallocène.

4. Procédé selon la revendication 3,
dans lequel
on utilise le ferrocène ou le magnésocène comme métallocène.
